# EUROPÄISCHE PATENTANMELDUNG

(11) **EP 4 800 725 A1**
(43) Veröffentlichungstag der Anmeldung: **02.09.2026**
(21) Anmeldenummer: 26161150.3
(22) Anmeldetag: 26.02.2026
(51) Int. Cl.: H01F 7/02, H01F 41/02, H02K 15/038

(54) **VERFAHREN UND VORRICHTUNG ZUR HERSTELLUNG ROTATIONSSYMMETRISCHER PERMANENTMAGNETE**

(30) Priorität: 27.02.2025 LU 509882
(71) Anmelder: WILO SE, 44263 Dortmund (DE)
(72) Erfinder: Krengel, Martin, 44263 Dortmund (DE)
(74) Vertreter: Cohausz Hannig Borkowski Wißgott

(57) **Zusammenfassung**

Die Erfindung betrifft ein Verfahren und eine Vorrichtung zur Herstellung eines rotationssymmetrischen, insbesondere ringförmigen Permanentmagneten (30) mit radial vorzugsgerichteter Magnetisierung (38) durch Fließpressen eines rotationssymmetrischen Rohlings (2) aus Magnetmaterial mittels Querstempeln (6) quer zur Rohlingachse (27) unter Reduzierung seines Querschnitts und Verlängerung seiner axialen Länge während der Rohling (2) gegen axiale Endanschläge (4, 5) fließt. Das Fließpressen wird zyklisch wiederholt, indem die Querstempel (6) wiederholt schließen und öffnen, und der Rohling (2) zwischen zwei aufeinander folgenden Fließpressungen um seine Achse gedreht wird. Hiermit wird eine optimierte radiale Magnetisierung des Permanentmagneten (30) erreicht vermieden, dass der Rohling (2) für die Magnetisierung eine bestimmte Ausrichtung benötigt.

## Beschreibung

Die Erfindung betrifft ein Verfahren und eine Pressvorrichtung zur Herstellung eines rotationssymmetrischen, insbesondere ringförmigen Permanentmagneten mit radial vorzugsgerichteter Magnetisierung durch Fließpressen eines rotationssymmetrischen Rohlings aus Magnetmaterial mittels Querstempeln quer zur Rohlingachse unter Reduzierung seines Querschnitts und Verlängerung seiner axialen Länge während der Rohling gegen axiale Endanschläge fließt. Im Besonderen betrifft die Erfindung die Herstellung ringförmiger Permanentmagnete für Rotoren elektrischer Maschinen, insbesondere für Elektromotoren.

Diese Erfindung ermöglicht verantwortungsbewusste Konsum- und Produktionsmuster durch optimierte Ressourcennutzung und Abfallreduzierung durch Einsparung von magnetischem Material für die Magnetproduktion. Dadurch werden nachhaltigere Produktionsmethoden ermöglicht und der ökologische Fußabdruck minimiert. Dies steht im Einklang mit dem Nachhaltigkeitsziel 12 der Vereinten Nationen (SDG 12).

Die Herstellung von rotationssymmetrischen, insbesondere ringförmigen Dauermagneten mit radialer Vorzugsmagnetisierung ist von großer Bedeutung auf den Gebieten der Fertigungstechnik, der Magnetwerkstoffe und des Metallpulverpressens. Diese Magnete sind in verschiedenen Anwendungen weit verbreitet, insbesondere in Elektromotoren, Generatoren und anderen elektromechanischen Geräten.

Ein Verfahren und eine Pressvorrichtung der genannten Art sind aus dem europäischen Patent EP 3822991 B1 bekannt. Es offenbart die Herstellung eines Permanentmagneten aus einem Rohling, dessen Querschnittsform kreuzartig ist. Der Rohling besteht aus axial zusammengepresstem (kompaktiertem) Magnetpulver, einem sogenannten Pulverpressling. Er weist radial vorstehende, im Querschnitt blockförmige Vorsprünge auf, gegen die die Querstempel pressen und damit das Volumen der Vorsprünge in Umfangsrichtung verdrängen. Der so umgeformte Rohling wird dann in einem Magnetfeld magnetisiert. Zur Herstellung eines Ringmagneten kann der Rohling ein Hohlkörper sein.

Bei diesem Verfahren hat sich zum einen herausgestellt, dass die besondere, kreuzförmige Querschnittsform des Rohlings im Falle eines Hohlkörpers nachteilig ist, weil seine Wandstärke im Zwischenbereich zwischen zwei benachbarten Vorsprüngen vergleichsweise dünn ist. Als gepresstes Pulver ist der kompaktierte Rohling nicht sehr stabil, vielmehr mit Handkraft verformbar, was bei dem Zwischenbereich dazu führt, dass der Rohling beim Transport in die Pressvorrichtung brechen kann. Die Brüchigkeit des Pulver-Rohlings ist also aufgrund der dünnen Stellen seiner besonderen Querschnittsform erhöht. Dies führt zu Ausschuss und höheren Herstellungskosten und stellt außerdem eine Herausforderung bei der Verarbeitung und Handhabung der Pulver-Rohlinge dar.

Ein weiterer Nachteil des aus EP 3822991 B1 bekannten Verfahrens besteht darin, dass der gepresste Rohling für die Erzeugung der vorzugsgerichteten Magnetisierung eine bestimmte Ausrichtung in dem Magnetfeld haben muss. Diese Ausrichtung muss derart sein, dass der Zwischenbereich, der vor dem Umformen zwischen zwei benachbarten Vorsprüngen liegt, für das Magnetisieren zwischen den zu erzeugenden Magnetpolen, d.h. in der Pollücke zwischen jeweils einem Nord- und Südpol des Permanentmagneten liegt. Denn dieser Zwischenbereich des Rohlings ist am wenigsten durch das Umformen geflossen und hat jedoch nicht so viel Druck in Querpressrichtung erhalten, wie die Vorsprünge. Vielmehr sind hier die Volumenelemente der Vorsprünge beim Fließen aufeinandergetroffen. Die Weiß'schen Bezirke sind infolgedessen im Zwischenbereich nicht genügend ausgerichtet. Im Falle eines ringförmigen, also hohlen Rohlings ist der Zwischenbereich, derjenige Bereich mit der geringsten Wandstärke. Ist der Rohling zu dieser bestimmten Ausrichtung verdreht, erfolgt die Magnetisierung des Rohlings nicht optimal und die Leistung des Magneten ist beeinträchtigt.

Die Notwendigkeit einer präzisen Ausrichtung erhöht somit die Fehleranfälligkeit des Herstellungsverfahrens. Die Gesamtzeit des Herstellungsverfahrens, seine Kosten und Komplexität sind notwendigerweise hoch. Daher besteht ein Bedarf an einer effizienteren und effektiveren Methode zur Herstellung von rotationssymmetrischen, insbesondere ringförmigen Dauermagneten mit radialer Vorzugsmagnetisierung.

Es ist deshalb Aufgabe der vorliegenden Erfindung, die genannten Nachteile zu überwinden und ein Verfahren sowie eine Pressvorrichtung bereitzustellen, das bzw. die eine einfachere und sichere Handhabung des Rohlings ermöglicht, die zu weniger Ausschuss führt, und eine orientierungsfreie Vorzugsmagnetisierung des gepressten Rohlings ermöglicht.

Diese Aufgaben werden durch ein Verfahren mit den Merkmalen des Anspruchs 1 und eine Pressvorrichtung mit den Merkmalen des Anspruchs 13 gelöst. Vorteilhafte Weiterbildungen sind in den Unteransprüchen angegeben und werden nachfolgend beschrieben.

Erfindungsgemäß wird ein Verfahren zur Herstellung eines rotationssymmetrischen, insbesondere ringförmigen Permanentmagneten mit radial vorzugsgerichteter Magnetisierung durch Fließpressen eines rotationssymmetrischen Rohlings aus Magnetmaterial mittels Querstempeln quer zur Rohlingachse unter Reduzierung seines Querschnitts und Verlängerung seiner axialen Länge während der Rohling gegen axiale Endanschläge fließt, vorgeschlagen, bei dem das Fließpressen zyklisch wiederholt wird, indem nämlich die Querstempel wiederholt schließen und öffnen, und der Rohling zwischen zwei aufeinander folgenden Fließpressungen um seine Achse gedreht wird.

Ferner wird eine Pressvorrichtung zur Herstellung eines rotationssymmetrischen, insbesondere ringförmigen Permanentmagneten mit radial vorzugsgerichteter Magnetisierung durch Fließpressen eines rotationssymmetrischen Rohlings aus Magnetmaterial vorgeschlagen, umfassend quer zur Rohlingachse bewegliche Querstempel und axiale Endanschläge, um den Rohling unter Reduzierung seines Querschnitts und Verlängerung seiner axialen Länge zu pressen während er gegen die axialen Endanschläge fließt, wobei die Pressvorrichtung Mittel zur Drehung des Rohlings zwischen zwei aufeinander folgenden Fließpressungen aufweist.

Der Rohling wird von den Pressstempeln also mehrfach radial, in Richtung seiner Achse, fließgepresst, bis eine gewünschte Endform, genauer gesagt eine bestimmte axiale Länge erreicht ist. Bei jedem Fließpressen wird der Außendurchmesser des Rohlings lokal etwas verringert, indem das Magnetmaterial transversal verschoben wird, d.h. sowohl in Umfangsrichtung als auch in axialer Richtung, wobei das Magnetmaterial allerdings nur in axialer Richtung ausweichen kann, da sich in Umfangsrichtung gedrängte Materialvolumina zwischen den Querstempeln begegnen. "Transversal" bezieht sich hier folglich auf die Richtung quer zur Vorwärtsbewegung der Querstempel, d.h. wenn sie sich auf die Rohlingachse zu bewegen. Da das Pressen quer zur Rohlingachse erfolgt, kann von einem Transversalpressverfahren gesprochen werden.

Durch das Fließpressen in Umfangsrichtung richten sich die Hauptkristallachsen (c-Achse) und damit die magnetischen Momente des Materials senkrecht zur Fließrichtung und parallel zur Pressrichtung aus. Ein Großteil der magnetischen Momente bzw. der Weiß'schen Bezirke ist anschließend über die gesamte axiale Länge der Endform radial orientiert, so dass kein Magnetmaterial (Topfboden und Rand) an den Axialenden des fließgepressten Rohlings abgeschnitten werden muss. Zur Herstellung eines Ringmagneten wird dadurch insgesamt weniger Magnetmaterial benötigt. Zudem sind die magnetischen Momente bzw. die Weiß'schen Bezirke nach dem Fließpressen über den gesamten Umfang der Endform radial orientiert, so dass eine bestimmte Ausrichtung der gepressten Rohlingen beim Magnetisieren erforderlich ist.

Durch das Drehen des Rohlings um seine Achse werden den Querstempeln wiederholt andere Außenmantelabschnitte des Rohlings zugewandt, als im jeweils vorherigen Pressschritt gepresst worden sind. Beim vorhergehenden Pressen nicht gepresste, und gegebenenfalls radial hervorgequollene Abschnitte des Rohlings werden somit beim nächsten Fließpressen gepresst und damit gegebenenfalls geglättet, der konkaven Innenkontur des jeweiligen Pressstempels entsprechend.

Diese erfindungsgemäße Herstellungsweise ähnelt dem bekannten Rundkneten, einem spanloses Umformverfahren, das ebenfalls auf eine Reduzierung des Querschnitts oder der Wandstärke eines Werkstücks gerichtet ist, allerdings eine Pressanordnung verwendet, bei dem die Querstempel um das Werkstück rotieren und in schneller Folge radial oszillieren und dadurch auf das Werkstück einhämmern, üblicherweise mit einer Geschwindigkeit von mehr als 1.000 Hüben pro Minute. Zudem sind beim Rundkneten die Werkstücke lange Stangen oder Rohre, die kontinuierlich in axialer Richtung an den oszillierenden Querstempeln vorbei durch das Presswerkzeug geschoben werden, oder bei denen in einem begrenzten Axialabschnitt eine Querschnittsverjüngung erzeugt wird. In Letzterem Fall ist der radialen Oszillation der Querstempel eine radiale Zustellbewegung durch keilförmige Außenstößel überlagert, was die Komplexität des Presswerkzeugs weiter erhöht.

Es hat sich überraschenderweise gezeigt, dass mit dem zyklisch wiederholten Fließpressen eines rotationssymmetrischen Rohlings aus Magnetmaterial eine Ausrichtung der Weiß'schen Bezirke erreichen lässt, welche wiederum die Herstellung magnetisch radial vorzugsgerichteter Permanentmagnete ermöglicht. Für diesen Effekt nutzt die Erfindung aus, dass das Magnetmaterial beim Fließpressen gegen die axialen Endanschläge fließt bzw. gepresst wird. Das bekannte Rundkneten hat diese Wirkung nicht, weil dort keine axialen Endanschläge für das Werkstück vorgesehen sind. Die Endanschläge sind bei dem erfindungsgemäßen Verfahren aus magnetischen Gründen jedoch wichtig, da das Magnetmaterial eine gewisse Presskraft für die Ausrichtung der Weiß'schen Bezirke braucht. Wenn das Material immer ausweichen und weiter fließen kann, wie beim konventionellen Rundkneten, erreicht man nicht die optimale Ausrichtung der magnetischen Momente.

Die vorliegende Erfindung löst die in der Beschreibungseinleitung genannten Probleme der erhöhten Brüchigkeit des Pulver-Rohlings, der besonderen Ausrichtung des gepressten Rohlings für das Magnetisieren, der Fehleranfälligkeit und der erhöhten Komplexität des Herstellungsverfahrens. Der in dem erfindungsgemäßen Verfahren verwendete Rohling ist stabiler und das Pressverfahren ist sicherer und einfacher.

Der herzustellende Permanentmagnet ist rotationssymmetrisch mit einem kreisförmigen Querschnitt. In axialer Richtung betrachtet, kann der herzustellende Permanentmagnet zylindrisch sein, d.h. einen konstanten Querschnitt entlang seiner Achse aufweisen. Das erfindungsgemäßen Verfahren ermöglicht in gleicher Weise die Herstellung von Permanentmagneten, deren Durchmesser sich entlang der Achse ändert. So können beispielsweise auch konische Permanentmagnete, insbesondere konische Ringmagnete hergestellt werden. Eine konische Außenkontur ist beispielsweise zur Befestigung des Permanentmagneten hilfreich, beispielsweise in einer Außenrotoranwendung, bei dem ein ringförmiger Permanentmagnet Teil eines Rotors ist, der um einen innenliegenden Stator dreht. Durch die konische Außenkontur kann der Permanentmagnet in einem Trägerring befestigt werden.

Vorteilhafterweise entspricht die Endform des gepressten Rohlings sogleich auch der Form des herzustellenden Permanentmagneten, so dass kein weiterer Umformschritt erforderlich ist. Die Querstempel definieren dann direkt die Endform bzw. die Außenkontur des herzustellenden Permanentmagneten.

Die Außenkontur des Rohlings kann im axialen Längsschnitt zylindrisch oder konisch sein. Der radiale Querschnitt ist vorzugsweise kreisförmig, er kann alternativ auch vielkantig sein.

In einer Ausführungsvariante ist der Rohling ein volles Werkstück, insbesondere ein Vollzylinder. Dies dient der Herstellung rotationssymmetrischer Permanentmagnete mit vollem Querschnitt wie beispielsweise vollzylindrische oder vollkonische Permanentmagnete.

In einer bevorzugten anderen Ausführungsvariante bildet der Rohling einen Hohlkörper, insbesondere einen Hohlzylinder. Es erstreckt sich dann ein Hohlraum, vorzugsweise koaxial zur Rohlingachse durch den Rohling, so dass kein Material aus dem Inneren verdrängt werden muss, um einen Ringmagneten herzustellen. Ein hohler Rohling dient somit der Herstellung rotationssymmetrischer Permanentmagnete mit hohlem Querschnitt, also rohr- oder ringförmige Permanentmagnete. Zum Erreichen der Endform bedarf es lediglich einer Reduzierung des Querschnitts bzw. der Wandstärke des Rohlings.

Vorzugsweise ist der Querschnitt des Hohlraums ebenfalls kreisförmig. Der Querschnitt kann alternativ aber auch vielkantig sein. Allerdings sollten der Querschnitt des Hohlraums und der äußere Querschnitt des Rohlings derart bemessen sein, dass entlang des Umfangs keine abschnittsweise dünnwandigen Stellen kleiner als 2mm existieren, da sie die Bruchgefahr des Rohlings erhöhen. Ein Rohling mit einem kreisrunden Außendurchmesser und einen kreisrunden Hohlraum hat deshalb eine verbesserte strukturelle Integrität. Vorzugsweise beträgt die Wandstärke des Rohlings nicht weniger als 2mm. Ideal ist eine Wandstärke zwischen 10mm und 20mm.

Obgleich die Innenkontur unabhängig von der Außenkontur des Rohlings gewählt werden kann, ist es prozesstechnisch sinnvoll, wenn beide Konturen zylindrisch sind, der Rohling also insgesamt einen Zylinder oder Rohrstück bildet.

Ein hohlzylindrischer Rohling hat ferner den Vorteil, dass ein drehbarer Mittelstift den Rohling durchragen und dazu verwendet werden kann, um den Rohling zu drehen, indem der Mittelstift gedreht wird. Hierzu kann zwischen dem Mittelstift und dem Rohling bereits vor dem ersten Fließpressen ein Kraftschluss und/ oder ein Formschluss bestehen. Ein solcher Kraftschluss und/ oder Formschluss liegt beispielsweise vor, wenn der Rohling vor dem Fließpressen in der Pressvorrichtung zunächst axial gepresst (kompaktiert) worden ist. Alternativ kann vor dem Fließpressen ein Spiel zwischen dem Rohling und dem Mittelstift bestehen, so dass noch kein Kraftschluss oder Formschluss besteht. Dieser entsteht oder diese entstehen dann beim ersten Fließpressen, da das Magnetmaterial gegen den Mittelstift gedrückt wird.

Um einen Formschluss in Umfangsrichtung zwischen dem Mittelstift und dem Rohling zu erreichen, kann der Mittelstift eine von einem Kreis abweichende Außenkontur aufweisen, der, unabhängig von einem Kraftschluss, dafür sorgt, dass die Drehbewegung des Mittelstifts auf den Rohling übertragen wird. Ein Formschluss ist insbesondere deshalb vorteilhaft, weil der gepresste Rohling nach dem Erreichen seiner Endform vom Mittelstift heruntergeschoben werden muss und der Rohling deshalb nicht zu fest an dem Mittelstift haften sollte. Damit das Magnetmaterial nicht mit den heißen Werkzeugkomponenten verschweißt, kann ein Formtrennmittel auf den Rohling und/ oder den Mittelstift aufgetragen werden, welches bei fehlendem Formschluss allerdings das Risiko einer rotatorischen Relativbewegung zwischen Mittelstift und Rohling birgt. Um dies für den Fall zu vermeiden, dass ein Kraftschluss für eine Drehmitnahme des Rohlings nicht ausreichen sollte, ist ein zusätzlicher Formschluss zwischen dem Mittelstift und dem Rohling sinnvoll. Beispielsweise kann der Mittelstift hierfür einen im Wesentlichen eckigen, insbesondere rechteckigen Querschnitt mit abgerundeten Außenkanten aufweisen.

Bei dem erfindungsgemäßen kann vorgesehen sein, dass der Rohling insgesamt 6-bis 24-mal gedreht wird. Dies bewirkt, dass das Magnetmaterial homogen fließt und in Umfangsrichtung betrachtet, keine Totzonen mit nicht geflossenen Bereichen existieren.

Sinnvollerweise gilt es zu vermeiden, dass die Drehung des Rohlings um einen Winkel von 360° geteilt durch die Anzahl n der Querstempel oder ein Vielfaches dieses Winkels ist, da in diesem Fall ein beim letzten Fließpressen von einem ersten Querstempel gepresster Umfangsabschnitt des Rohlings lediglich vollständig vor einen zweiten Querstempel gedreht wird, der in Umfangsrichtung zum ersten Querstempel benachbart ist, so dass derselbe Umfangsabschnitt beim nächsten Fließpressen wieder gepresst werden würde. Die beim letzten Fließpressen nicht gepressten Zwischenabschnitte zwischen den gepressten Umfangsabschnitte abschnitten blieben somit weiterhin ungepresst.

Die Anzahl der Querstempel kann zwischen vier und acht betragen, beispielsweise vier, fünf, sechs oder acht.

Ideal ist es deshalb, wenn die Drehung des Rohlings im Falle einer Anordnung bzw. Verwendung von vier, fünf, sechs oder acht Querstempeln um einen Winkel zwischen 25° und 45°, vorzugsweise zwischen 30° und 35° erfolgt. Der Drehung ist dadurch einerseits minimal, andererseits aber ausreichend, um den Rohling entlang seines gesamten Umfangs zu pressen.

Von weiteren Vorteil ist es, wenn der Drehwinkel bei einem wiederholten Drehen des Rohlings gegenüber dem Drehwinkel eines vorherigen Drehens betragsmäßig verändert ist. So kann der Drehwinkel bei einem ersten Drehen beispielsweise 25°, bei einem zweiten Drehen beispielsweise 35° betragen. Gemäß einer Ausführungsvariante kann sogar vorgesehen sein, dass bei jedem Drehen des Rohlings ein betragsmäßig anderer Drehwinkel verwendet wird. Dies stellt sicher, dass nicht abwechselnd dieselben Umfangsabschnitte des Rohlings gepresst werden.

In einer Ausführungsvariante kann der Rohling vor und zurück gedreht werden, anstelle einer Drehung in stets derselben Richtung. Der Rohling vollführt also in diesem Fall eine oszillierende Drehbewegung bzw. eine Schwenkbewegung hin und her. So kann man beispielsweise gezielt für den Rotor eines Elektromotors einen Ringmagnet herstellen, der 4 Pole hat, die zu den Enden hin, in Umfangsrichtung betrachtet, einen kleineren Radius haben, wodurch Luftspalterweiterung gebildet werden, die eine sinusförmige Induktion im Stator des Elektromotors erzeugen.

Das Fließpressen kann beispielsweise 6- bis 12-mal pro Minute erfolgen. Mit anderen Worten wird alle 5 bis 10 Sekunden eine neue Fließpressung ausgeführt. Vorzugsweise erfolgt das Fließpressen ruckfrei mit einem kontinuierlichen, mehrere Sekunden, beispielsweise 5-10 Sekunden anhaltendem Krafteintrag, der durch eine fortschreitende Vorwärtsbewegung der Querstempel um eine bestimmte Hublänge bewirkt wird. Das erfindungsgemäße Verfahren unterscheidet sich somit grundlegend vom bekannten Rundkneten, bei dem üblicherweise ca. 1000 Hiebe pro Sekunde erfolgen, also ruckartig auf das Werkstück eingewirkt wird. Das erfindungsgemäße Verfahren ist durch die vergleichsweise geringe Anzahl an Fließpressungen pro Minute erheblich leiser. Es berücksichtigt zudem das Material und die Beschaffenheit des Rohlings. So ist ein Magnetmaterial spröde und kann durch ruckartige Krafteinwirkung leicht brechen. Zudem kann der Rohling ein Pulverpressling sein, welcher zumindest zu Beginn des Verfahrens vergleichsweise weich und plastisch leicht verformbar ist. Hiebe würden in diesem Fall Brüche in dem Rohling erzeugen.

Infolge des wiederholten Fließpressens erfolgt die Umformung des Rohlings in seine Endform durch einen inkrementellen Prozess. Dabei kann der von den Querstempeln jeweils ausgeführte Pressweg, um den die Hublänge der Querstempel bei jeder Wiederholung des Fließpressens erhöht wird, zwischen 0,25mm und 1,0mm betragen. Vorzugsweise ist der Pressweg zu Beginn des Verfahrens größer und wird mit jedem Fließpressen geringer. Dabei variiert auch die Umformgeschwindigkeit des Rohlings.

Weiter bevorzugt kann bei dem erfindungsgemäßen Verfahren vorgesehen sein, dass der Rohling vor dem Fließpressen auf eine Bearbeitungstemperatur erwärmt und in diesem erwärmten Zustand fließgepresst wird. Dies begünstigt die Fließfähigkeit und Verformbarkeit des Magnetmaterials und damit die Ausrichtung der Weiß'schen Bezirke. Das Erwärmen kann mittels einer Heizeinrichtung innerhalb der Pressvorrichtung erfolgen. Die Bearbeitungstemperatur kann zwischen 750°C und 900°C liegen. Dass erfindungsgemäße Fließpressen kann daher als Warm- oder Heißfließpressen bezeichnet werden.

Wie bereits angesprochen, kann der Rohling ein Pulverpressling sein, der durch axiales Pressen eines Pulvers des Magnetmaterials in einer Pressform einer Pressvorrichtung mittels einem Oberstempel und einem Unterstempel hergestellt ist, die relativ zueinander axial bewegt werden, während der Pulverpressling zwischen ihnen liegt, wobei die Pressform einen Innenraum aufweist, der die Außenkontur des Rohlings definiert. Der Pulverpressling besteht dabei aus verdichtetem pulvrigem Magnetmaterial und wird auch als Grünling bezeichnet. Durch das Verdichten werden Hohlräume im Magnetpulver reduziert, so dass sich das Volumen einer bestimmten Masse an Magnetpulver verringert. Im Pulverpressling haben die Pulverpartikel jedoch keinen Stoffschluss zueinander, so dass geringe Handkraft den Pulverpressling wieder zu Pulver werden lässt. Gleichwohl vereinfacht der Pulverpressling das Portionieren der Magnetpulvermengen.

Diese Pressvorrichtung kann dieselbe sein, die auch das erfindungsgemäße Fließpressen durchführt. Mit anderen Worten umfasst die erfindungsgemäße Pressvorrichtung nicht nur die Querstempel und den gegebenenfalls vorhandenen Mittelstift, sondern auch die Pressform und den darin geführten Ober- und Unterstempel, wobei der Ober- und Unterstempel relativ zueinander axial beweglich sind, um den Rohling durch axiales Pressen in der Pressform aus einem Pulverpressling herzustellen. Dies hat den Vorteil, dass der Ober- und der Unterstempel die Endanschläge für den Rohling beim Fließpressen bilden können. Hierzu werden der Rohling und der Ober- und/ oder der Unterstempel dann vor dem Fließpressen relativ zueinander entsprechend so positioniert, dass der Ober- und/ oder der Unterstempel die axialen Endanschläge für das beim Fließpressen des Rohlings fließende Magnetmaterial bildet/ bilden. Ein weiterer Vorteil der Ausführung des Axialpressens des Pulverpresslings und des Fließpressens des Rohlings auf derselben Vorrichtung besteht darin, dass Energie eingespart werden kann, da kein zusätzliches Aufheizen des Werkstücks zwischen diesen beiden Pressschritten erforderlich ist. Ferner wird das Risiko von Spannungsrissen beim Abkühlen vermieden. Ferner wird auch die Oxidation verringert, da kein Transport heißer Rohlinge von einer Pressvorrichtung zur anderen erfolgen muss.

Vor dem ersten Fließpressen kann ein einen Spalt bildender Abstand zwischen dem Rohling und dem Oberstempel, oder zwischen dem Rohling und dem Unterstempel oder sowohl zwischen dem Rohling und dem Oberstempel als auch dem Rohling und dem Oberstempel, der infolge des Fließpressens kontinuierlich kleiner wird. Es ist allerdings auch möglich, dass der Ober- und/ oder der Unterstempel spaltfrei an dem Rohling anliegt/ anliegen und federkraftbeaufschlagt gegen den Rohling drücken, um beim Fließpressen dann nachgeben zu können. Der Ober- und/ oder der Unterstempel wird bzw. werden dann beim Fließpressen vom Magnetmaterial gegen die entsprechende Federkraft zurückgedrückt. Dies hat den Vorteil, dass bereits beim ersten Fließpressen, genauer gesagt zu keinem Zeitpunkt, an den axialen Enden des Rohlings eine freies Fließen des Magnetmaterials erfolgen kann, sondern durch die Federkraft eine Gegenkraft existiert, die die Ausrichtung der Weiß'schen Bezirke begünstigt.

Wie bereits angesprochen, kann das Mittel zur Drehung des Rohlings der zuvor genannte, den Rohling durchragende Mittelstift sein, auf dem der Rohling drehfest, infolge Kraft- und/ oder Formschluss, angeordnet ist. In diesem Fall ist der Mittelstift schwenk- oder drehbar antreibbar. Alternativ kann das Mittel zur Drehung des Rohlings ein Drehteller sein, auf dem der Rohling angeordnet ist und der schwenk- oder drehbar antreibbar ist. Weiter alternativ kann das Mittel zur Drehung des Rohlings der Unterstempel sein, auf dem der Rohling aufliegt und der schwenk- oder drehbar antreibbar ist. Das Mittel kann beispielsweise mit Hilfe eines Servomotors gedreht oder geschwenkt werden.

In einer Ausführungsvariante kann das Fließpressen radial bezogen auf die Rohlingachse erfolgen. Dies bedeutet, dass die Bewegungsrichtung der Querstempel linear ist und damit die Kraftrichtung stets auf die Rohlingachse gerichtet ist. Die Querstempel weisen dann eine symmetrische Pressfläche auf. Der Aufbau der Pressvorrichtung wird dadurch vereinfacht und die Pressfläche gleichmäßig belastet. Allerdings ist es ebenfalls möglich, dass die Bewegungsrichtung der Querstempel sekantial zur Rohlingachse ist oder auch entlang einer bogenförmig gekrümmten Bahn in Richtung der Rohlingachse verläuft. Sekantial bedeutet, dass die Hauptbewegungsrichtung der Querstempel parallel zu einem Radius liegt, d.h. quasi in Richtung an der Rohlingachse vorbei gerichtet ist. Dies macht es möglich, den Materialfluss in Umfangsrichtung zu beeinflussen.

Als Magnetmaterial für den Pulverpressling kann ein ferromagnetisches Material verwendet werden, das seltene Erden enthält, beispielsweise eine Legierung aus Neodym-Eisen-Bor (NdFeB).

Weitere Vorteile und Merkmale der Erfindung werden nachfolgend anhand von Ausführungsbeispielen und der beigefügten Figuren beschrieben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Die in den Figuren verwendeten Bezugszeichen behalten von einer Figur zur nächsten ihre Bedeutung und identifizieren identische oder gleichwirkende Elemente.

Es zeigen:
- Figur 1:: ein Ablaufdiagramm des erfindungsgemäßen Verfahrens
- Figur 2:: ein Ablaufdiagramm für Schritt S3 des Verfahrens nach Figur 1
- Figur 3:: Axialpressen des Pulverpresslings zu einem Rohling
- Figur 4:: den radialen Querschnitt eines Ringmagneten mit radialer Vorzugsorientierung
- Figur 5:: Entwicklung des Rohling während des Fließpressens gemäß Figur 2
- Figur 6:: Eine Veranschaulichung der Schritte des erfindungsgemäßen Verfahrens
- Figur 7:: eine Pressvorrichtung in perspektivischer Ansicht
- Figur 8:: eine überlagerte Darstellung des Anfangs- und Endzustands der Pressvorrichtung beim Fließpressen in einem radialen Querschnitt auf Höhe der Querstempel
- Figur 9:: einen axialen Querschnitt durch die Pressvorrichtung entlang der Schnittlinie E-E gemäß Figur 8
- Figur 10:: einen Stempelkörper
- Figur 11:: einen Stempelkörper mit Kantenvorsprüngen an den Umfangsenden
- Figur 11a:: Vergrößerter Ausschnitt des Stempelkörpers nach Figur 11 mit Pressfläche
- Figur 12:: einen Stempelkörper mit Stufenvorsprüngen an den Axialenden

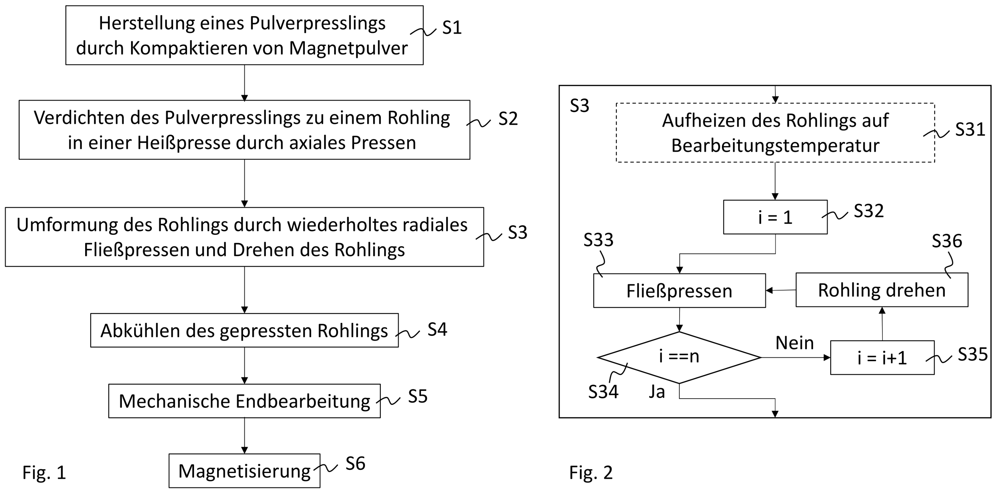

Figur 1 veranschaulicht den allgemeinen Ablauf eines erfindungsgemäßen Verfahrens, das aus den nachfolgend erläuterten Schritten besteht.

In einem ersten Schritt S1 erfolgt die Herstellung eines Pulverpresslings 1 aus feinkörnigem pulvrigem magnetischen Material durch Kompaktieren dieses Pulvers. Das magnetische Material kann beispielsweise Seltene Erden-Eisen-Cobalt-Bor oder Neodym-Eisen-Bor (NdFeB) sein. Der Pulverpressling 1 ist ein Hohlkörper mit einer beliebigen Ringform. Der Hohlraum 14 kann zylindrisch und im Querschnitt kreisförmig oder vielkantig sein.

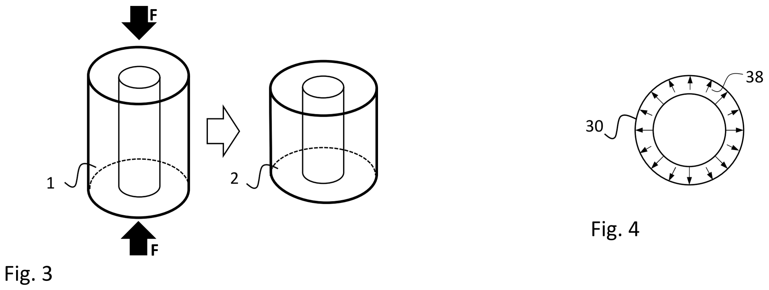

In einem zweiten Schritt S2 erfolgt ein Verdichten des Pulverpresslings 1 zu einem Rohling 2. Der Pulverpresslings 1 wird hierbei in eine Heißpresse eingeführt und bei einer Temperatur zwischen 750° C und 850° C mit einer Kraft F axial gepresst. Dies veranschaulicht Figur 3. Er wird dabei in seiner Höhe reduziert, so dass eine maximale Dichte erreicht wird.

In einem dritten Schritt S3 erfolgt das Umformen des Rohlings 2 durch radiales Fließpressen mittels quer zur Rohlingachse 27 pressenden Querstempeln 6, so dass das Materialvolumen des Rohlings 2 axial fließt. Dies wird n-fach wiederholt und der Rohling 2 nach jedem Pressen gedreht. Eine Detaildarstellung des dritten Schrittes S3 zeigt Figur 2.

Das Umformen in Schritt S3 erfolgt ebenfalls im erwärmten Zustand des Rohlings, genauer gesagt bei einer Bearbeitungstemperatur von 750-850 °C. Somit wird der Rohling weiter erwärmt oder erneut erwärmt, Schritt S31, sofern der zweite Schritt S2 außerhalb der Pressvorrichtung erfolgte, die nun das radiale Pressen gemäß Schritt S3 ausführt.

Ist die Bearbeitungstemperatur erreicht, wird mit dem ersten Fließpressen begonnen. Dies ist in Figur 2 programmtechnisch veranschaulicht, in dem eine Laufvariable i mit dem Wert 1 initialisiert wird, siehe Schritt S32. Sodann erfolgt das erste Fließpressen, Schritt S33. Dies erfolgt quer zur Rohlingachse 17, also radial, mit einer Kraft von etwa 15 - 20 kN. Dieser Pressschritt S33 wird eine Anzahl n von 6-bis 24-mal durchgeführt, um eine gleichmäßige Verformung des Rohlings 2 zu erzielen.

Nach dem ersten und jedem weiteren Fließpressen erfolgt eine Abfrage, ob die vorgesehene Anzahl n an Pressungen bereits erfolgt ist, siehe Schritt S34. Falls nicht, wird die Zählvariable i um eins erhöht, Schritt S35, und das Fließpressen gemäß Schritt S33 wird wiederholt. Zuvor wird der Rohling 2 jedoch noch um seine Achse 17 gedreht, und zwar um einen Winkel zwischen 25° und 45°, Schritt S36. Durch das Drehen entsteht ein kreisringförmiger, stabilerer Permanentmagnet 30. Zu beachten ist, dass hier nicht das Werkzeug um das Werkstück rotiert, also keine Querstempel 6 um den Rohling 2, sondern das Werkstück (der Rohling) rotiert um sich selbst und das Werkzeug (Querstempel 6) steht fest. Ist die vorgesehene Anzahl n an Pressungen erfolgt, ist der dritte Schritt S3 vollendet und es wird Schritt S4 ausgeführt.

Bei jedem Fließpressen gemäß Schritt S33 fahren Querstempel 6 zu und auf. Genauer gesagt fahren die Querstempel 6 zunächst zu, indem sie sich radial in Richtung der Rohlingachse 17 bewegen, was einer Schließbewegung entspricht, und dadurch einen Teil des Materialvolumens des Rohlings 2 verschieben. Anschließend fahren die Querstempel 6 wieder auf, indem sie radial von der Rohlingachse 17 zurückfahren, was einer Öffnungsbewegung entspricht, um den Rohling 2 freizugeben. Bei jeder oder jeder zweiten oder dritten Schließbewegung fahren die Querstempel etwas weiter vor, bis sie am Ende des letzten, also n-ten Fließpressens in Umfangsrichtung bündig aneinander liegen.

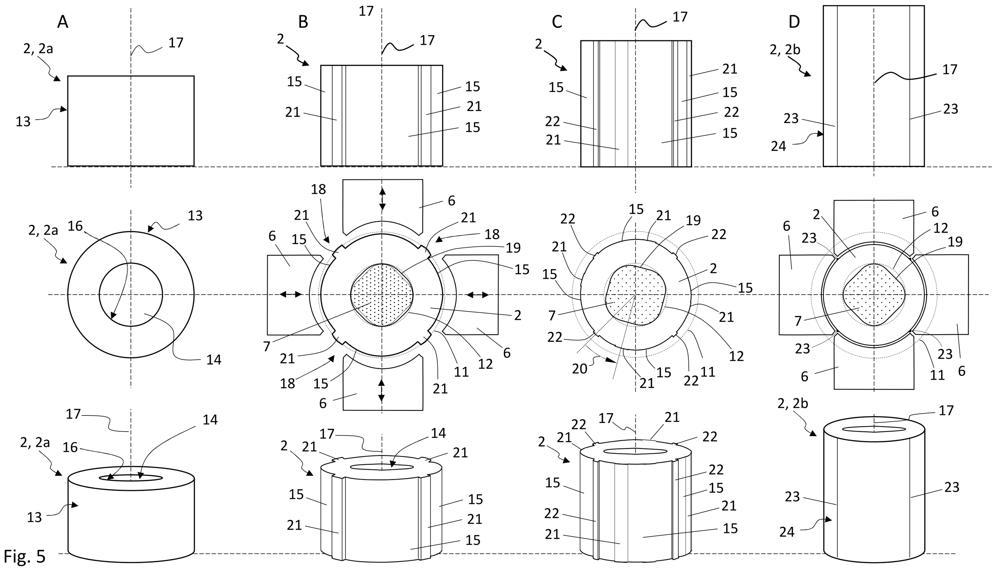

Figur 5 zeigt eine Entwicklung des Rohling 2 während des Fließpressens gemäß Schritt S3 in drei Ansichten, nämlich eine Seitenansicht (oben), eine Draufsicht (Mitte) und eine perspektivische Ansicht (unten), wobei jede Ansicht zu vier verschiedenen Zeitpunkten A - D gezeigt ist. Gleiche Zeitpunkte sind dabei untereinander angeordnet. Figur 5 zeigt somit 12 Einzeldarstellungen des Rohlings 2, der sich zeitlich betrachtet von links nach rechts entwickelt.

Vor dem ersten Fließpressen, Zeitpunkt A, liegt der Rohling 2 in der ganz links dargestellten Form vor. Dies ist der Zustand des Rohlings 2 nach dem axialen Pressen des Pulverpresslings 1 und ist die Ausgangsform 2a für das Fließpressen. Der Rohling 2 hat in der Ausgangsform 2a einen Durchmesser außen von etwa 29-31 mm und eine axiale Länge (Höhe) von 12-14 mm. Die Endform 2b des Rohlings 2 ist ganz rechts dargestellt. Der Rohling 2 ist ein Hohlkörper mit einer zylindrischen Außenkontur 13 kreisförmigem Querschnitts und einem konzentrischen Hohlraum 14 kreisförmigem Querschnitts mit einer zylindrischen Innenkontur 16. Die Rohlingachse ist mit Bezugsziffer 17 gekennzeichnet.

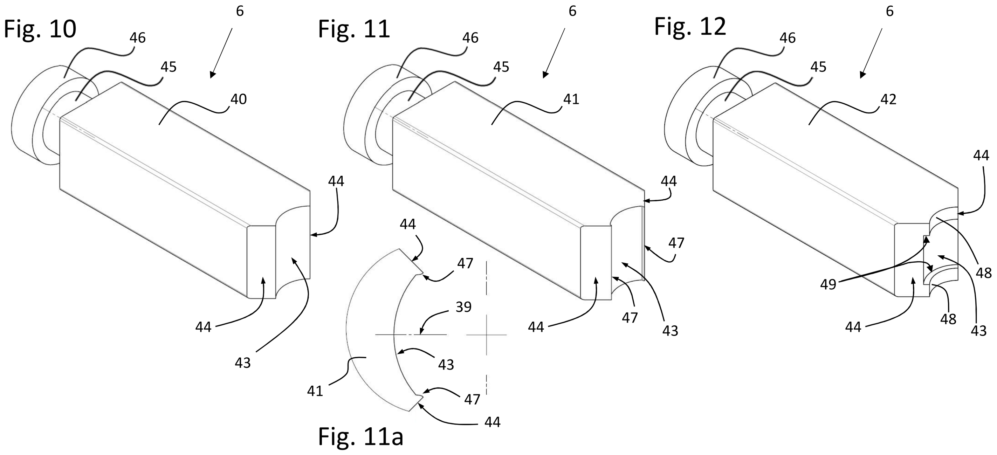

Der Zeitpunkt B zeigt den Rohling 2 nach dem ersten Fließpressen gemäß Schritt S33. Die Querstempel 6 sind hier einmal zu- und wieder aufgefahren, durch Doppelpfeile visualisiert, und befinden sich in ihrer Ruhelage beabstandet zum Rohling 2. Die Querstempel 6 haben den Rohling 2 mit ihren Pressfläche 43 (vgl. Figur 10-13) verformt, so dass die gepressten Flächen 15 des Außenmantels des Rohlings 2 gegenüber dem ursprünglichen Außendurchmesser 11, der durch einen gestrichelten Kreis gekennzeichnet ist, in Richtung der Rohlingachse 17 versetzt sind.

Da die Querstempel 6 erst im geschlossenen, aneinander anliegenden Zustand die Außenkontur des Endform 2b des Rohlings 2 definieren (vgl. hierzu Zeitpunkt D in Figur 5) gibt es zu Beginn des Fließpressens jeweils einen Zwischenbereiche 18 zwischen zwei benachbarten gepressten Flächen 15, die nicht von den Querstempeln 6 gepresst werden. In diesen Zwischenbereichen 18 bilden sich infolge des Fließpressens Vorsprünge 21, die radial vom Rohling 2 abstehen. Die Vorsprünge 21 sind länglich und erstrecken sich parallel zur Rohlingachse 17, wie die Seitenansicht (oben) und die perspektivische Ansicht (unten) zum Zeitpunkt B zeigen. Zudem kann ein Teil des Magnetmaterials des Rohlings 2 beim Fließpressen aus den Zwischenbereichen 18 radial hervorquellen, so dass die Vorsprünge 21 radial über den Außendurchmesser 11 der Ausgangsform 2a vorstehen können.

Durch das Fließpressen wird der Rohling 2 axial länger, was anhand der Seitenansicht (oben) und der perspektivische Ansicht (unten) erkennbar ist. Zu den Zeitpunkten B, C, und D durchragt ein Mittelstift 7 den Hohlraum 14. Dieser Mittelstift 7 hat einen quadratischen Querschnitt mit derart abgerundeten Seitenkanten, dass seine Diagonale von Seitenkante zur gegenüberliegenden Seitenkante im Wesentlichen dem Innendurchmesser 12 des Hohlraums 14 der Ausgangsform 2a entspricht, bzw. wenige Zehntelmillimeter kleiner ist, um den Mittelstift 7 in den Hohlraum 14 einzuführen. Somit gibt es zwischen den Seitenflächen des Mittelstifts 7 und der Innenkontur 16 des Hohlraums Freiräume. Der Innendurchmesser 12 ist in Figur 5 ebenfalls mit einem gestrichelten Kreis veranschaulicht. Wie die Draufsicht (Mitte) zum Zeitpunkt B in Figur 5 anhand des ehemaligen Innendurchmessers 12 und der neuen Innenkontur 19 des Hohlraums 14 erkennen lässt, ist durch das erste Fließpressen ein Teil des Materialvolumens des Rohlings 2 zum Mittelstift 7 hin verschoben und in die Freiräume gedrängt. Ferner umschließt das Materialvolumens des Rohlings 2 den Mittelstift 7 an seinen Seitenkanten form- und kraftschlüssig.

Zum Zeitpunkt C ist der Rohling 2 ein zweites Mal fließgepresst worden, allerdings in einer Orientierung relativ zu den Querstempeln 6, die gegenüber der Orientierung zum Zeitpunkt B um einen Drehwinkel 20 von ca. 30° entgegen dem Uhrzeigersinn gedreht ist. Diese gedrehte Orientierung liegt zu dem in Figur 5 dargestellten Zeitpunkt C noch vor. Die Drehung um den Winkel 20 ist vor dem zweiten Fließpressen erfolgt und hat zur Folge, dass die Vorsprünge 21, die zum Zeitpunkt B vorlagen, vor die Querstempel 6 gedreht worden sind und beim zweiten Fließpressen Teil der gepressten Fläche 15 waren, d.h. ebenfalls gepresst worden sind. Dies ist daran erkennbar, dass die Vorsprünge 21 nun im Wesentlichen geplättet sind und damit nicht mehr als Vorsprünge radial aus dem Rohling 2 vorstehen. Stattdessen sind neue Vorsprünge 22 ist den Zwischenbereichen 18 entstanden. Zudem ist das Magnetmaterial des Rohlings 2 weiter in Richtung Mittelstift 7 gedrängt und liegt schon fast vollumfänglich am Mittelstift 7 an, so dass die neue Innenkontur 19 fast der Außenkontur des Mittelstifts 7 entspricht. Zudem zeigen die Seitenansicht (oben) und die perspektivische Ansicht (unten) zum Zeitpunkt C gegenüber dem Zeitpunkt B, dass durch das erneute Fließpressen der Rohling 2 erneut axial länger geworden ist.

Das Drehen des Rohlings 2 um einen Drehwinkel 20 um seine Achse 17 sowie anschließendes Fließpressen erfolgen nach dem Zeitpunkt C in Figur 5 noch mehrere Male bis die Endform 2b zum Zeitpunkt D in Figur 5 erreicht ist. Dabei können der Drehwinkel und die Drehrichtung zwischen zwei Pressungen gleich oder aber auch unterschiedlich sein. Die einstigen Vorsprünge 21, 22 sind in der Endform 2b durch das wiederholte Drehen und Pressen des Rohlings 2 nicht mehr erkennbar. Die zylindrische Außenkontur 24 der Endform 2b ist geglättet bzw. bis auf leichte Unebenheiten 23 glatt, die durch ein weiteres radiales Pressen nicht entfernt werden können.

In der Endform 2b hat der Rohling 2 seine gewünschte Länge erreicht, die durch den Abstand eines Oberstempels 4 und eines Unterstempels 5 der das Fließpressen ausführenden Pressvorrichtung 50 definiert ist. Die zum Rohling 2 gerichteten axialen Stirnseiten des Oberstempels 4 und des Unterstempels 5 bilden beim axialen Fließen des Rohlings während des Pressens axiale Endanschläge. Der Rohling 2 hat in der Endform 2a einen Durchmesser außen von etwa 23 mm und eine axiale Länge (Höhe) von etwa 30 mm. Gegenüber der Ausgangsform 2a ist der Rohling somit um ca. 7mm in seinem Durchmesser bzw. 3,5mm seiner Wandstärke reduziert und ca. 17 mm seiner axialen Länge vergrößert worden. Die Endform 2b bildet einen hohlen Kreiszylinder, der dem herzustellenden ringförmigen Permanentmagneten 30 entspricht.

Es sei angemerkt, dass die Darstellungen in Figur 5 lediglich der Veranschaulichung der Grundidee des erfindungsgemäßen Verfahrens dienen. Insbesondere sind die Abmessungen der Vorsprünge 21, 22 hier so gewählt, dass sie in den Einzeldarstellungen in Figur 5 gut erkennbar sind. In Wirklichkeit kann die Hublänge der Querstempel derart gering sein, dass die Vorsprünge 21, 22 kaum erkennbar sein oder allenfalls bei dem oder den ersten Pressungen noch erkennbar sind.

Um den Rohling 2 von 31mm auf 23mm, d.h. um ca. 8mm zu reduzieren, müssen die Querstempel jeweils eine maximale Hublänge von 4mm zurücklegen. Dies kann beispielsweise mit n = 10 Fließpressungen mit jeweils einem Pressweg von 0,4mm erfolgen. Mit anderen Worten, werden die Querstempel 6 beim ersten Fließpressen entlang einer Hublänge von 0,4mm gegen den Rohling 2 bewegt, der hier gleich dem Pressweg ist. Beim zweiten Fließpressen werden die Querstempel 6 mit einer Hublänge von 0,8mm bewegt, beim dritten Fließpressen mit einer Hublänge von 1,2mm usw., sodass beim 10. Fließpressen insgesamt eine Hublänge von 4mm vorliegt, allerdings wird der Rohling bei jedem Fließpressen nur um einen Pressweg von 0,4mm gepresst. Der Gesamthub der Querstempel 6, also die Gesamtlänge der Bewegung der Querstempel 6, versteht sich zuzüglich eines Offsets, der dem Abstand zwischen Querstempel 6 und Rohling 2 vor dem Fließpressen entspricht.

Zurückkommend auf Figur 1 erfolgt nun in dem auf Schritt S3 folgenden vierten Schritt S4 die Abkühlung des gepressten Rohlings 2 auf Raumtemperatur. Die Abkühlung erfolgt mit einer Geschwindigkeit von ca. 10 °C pro Minute.

In einem fünften Schritt S5 erfolgt die mechanische Endbearbeitung des gepressten Rohlings 2, bei der er in die gewünschte Form und Größe gebracht wird.

In einem sechsten Schritt S6 erfolgt die Magnetisierung des umgeformten und endbearbeiteten Rohlings 2. Dies kann im montierten Zustand des Rohlings im Rotor eines Elektromotors erfolgen, so dass quasi der Rotor magnetisiert wird. Der Rohling 2 wird also unmagnetisch verbaut und erst nach Fertigstellung des Rotors magnetisiert. Das Ergebnis ist ein ringförmiger Permanentmagnet 30 mit radialer Vorzugsmagnetisierung 38.

Der hergestellte Permanentmagnet 30 hat einen kreisförmigen Querschnitt mit einer hohen mechanischen Stabilität. Er bricht nicht so leicht und kann daher sicher montiert werden. Der Permanentmagnet 30 hat auch eine optimale radiale magnetische Vorzugsrichtung38 , wodurch die Notwendigkeit einer genauen Ausrichtung beim Magnetisieren entfällt. Die radiale magnetische Vorzugsrichtung 38 des Permanentmagneten 30 ist in Figur 4 gezeigt. Das Verfahren ist somit insgesamt weniger fehleranfällig, betriebssicher und stabil.

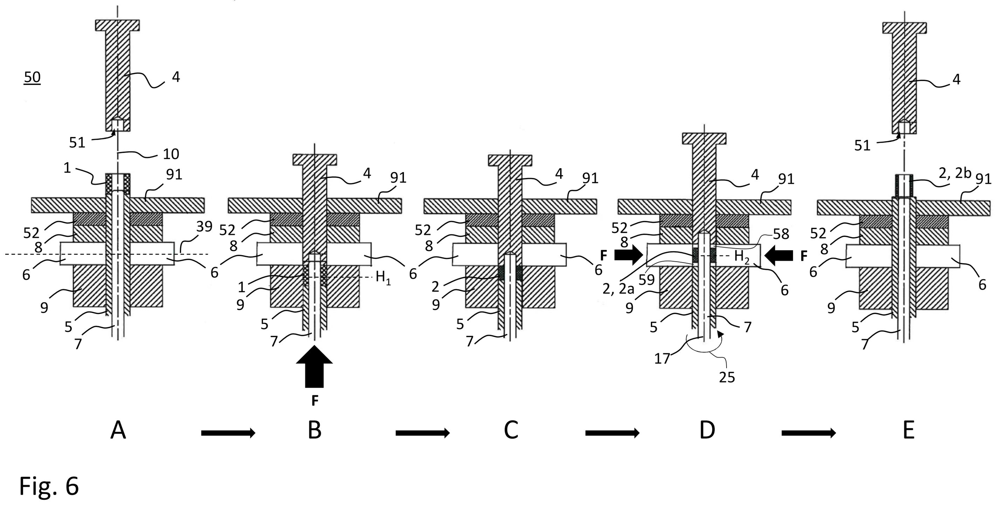

Während in Figur 5 ein Rohling 2 mit einer in der Ausgangsform 2a im Querschnitt kreisförmigen Innenkontur 16 des Hohlraums 14 umgeformt wird, die sich beim Fließpressen nach und nach an die Außenkontur des Mittelstifts 7 anschmiegt, kann die Innenkontur 16 des Hohlraums 14 der Ausgangsform 2a in einer anderen Ausführungsvariante im Querschnitt betrachtet direkt dem Querschnitt des Mittelstifts 7 entsprechen. Dies ist beispielsweise der Fall, wenn das axiale Pressen im zweiten Schritt S2 auf derselben Pressvorrichtung 50 ausgeführt wird, die das radiale Fließpressen durchführt, genauer gesagt, wenn der Mittelstift 7, der in Figur 5 gezeigt ist, schon beim axialen Pressen gemäß Schritt S2 den Pulverpressling 1 durchragt. Dies ist bei der nachfolgend anhand der Figuren 6 bis 9 erläuterten Pressvorrichtung 50 der Fall.

Figur 6 zeigt die Hauptkomponenten einer erfindungsgemäßen Pressvorrichtung 50 sowie den Verlauf des auf dieser Vorrichtung 50 ausgeführten Verfahrens gemäß der Erfindung. Die erfindungsgemäße Pressvorrichtung 50 dient der Herstellung eines ringförmigen Permanentmagneten 30 durch Umformung des Rohlings 2 von seiner Ausgangsform in die Endform 2b. Die Pressvorrichtung 50 umfasst einen Oberstempel 4, einen Unterstempel 5 mit dem Mittelstift 7, eine ein Oberteil 8 und ein Unterteil 9 aufweisende Pressform sowie die Querstempel 6. Eine Abdeckplatte 91 deckt die Pressform 8, 9 ab, die aufheizbar ist, um den Rohling auf eine Bearbeitungstemperatur aufzuwärmen. Ferner liegt zwischen der Abdeckplatte 91 und der Pressform bzw. dem Oberteil 8 eine Abstandsplatte 52.

Der Unterstempel 5 ist als Hohlwelle ausgebildet, wobei in dem Unterstempel 5 der Mittelstift 7 koaxial beweglich geführt ist. Der Mittelstift 7 kann unabhängig vom Unterstempel 5 und Oberstempel 4 relativ zu diesen linear bewegt und gedreht werden. Die Pressform 8, 9 dient zur axialen Führung von Oberstempel 4 und Unterstempel 5. Hierfür weist die Pressform 8, 9 eine axiale Längsausnehmung auf, deren Querschnitt im Wesentlichen dem Außenquerschnitt des Unterstempels 5 beziehungsweise des Oberstempels 4 entspricht. Ober- und Unterstempel 4, 5 weisen ebenfalls denselben Querschnitt auf. Sie sind zudem relativ zueinander in der Längsausnehmung beweglich. Die Pressform 8, 9 weist ferner Querausnehmungen auf, in denen die Querstempel 6 quer zur Längspressachse 10 linear entlang einer Querpressachse 39 geführt sind.

Das erste Bild A von Figur 6 zeigt die Einlegeposition des Pulverpresslings 1 in die erfindungsgemäße Pressvorrichtung 50. Der Oberstempel 4 ist hierfür auf Abstand zur Pressform 8, 9 gefahren, damit der Pulverpressling 1 auf dem Unterstempel 5 positioniert werden kann. Hierzu ist der Unterstempel 5 soweit aus der Pressform 8, 9 herausgefahren, dass sein axiales Ende geringfügig vor der Abdeckplatte 91 vorsteht. Um eine axiale Zentrierung des Pulverpresslings 1 zu erreichen, steht der Mittelstift 7 etwas axial von dem Unterstempel 5 hervor, sodass der Pulverpressling 1 so auf den Unterstempel 5 gesetzt werden kann, dass der Mittelstift 7 in dem Hohlraum 14 einliegt.

Der Unterstempel 5 fährt anschließend in die Pressform 8, 9 hinein, bis der Pulverpressling 1 vollständig im Unterteil 9 der Pressform liegt, d.h. unterhalb der Querstempel 6. Dies zeigt Bild B der Figur 6, wobei der Pulverpressling 1 auf einer ersten axialen Höhe H₁ angeordnet ist. Der Oberstempel 4 folgt dem Unterstempel 5 und wird zunächst so positioniert, dass sein zum Pulverpressling 1 gerichtetes Axialende am Pulverpressling 1 anliegt, vgl. Bild B. Der Mittelstift 7 wird so positioniert, dass er den Hohlraum 14 des Pulverpresslings 1 vollständig ausfüllt, insbesondere in eine Sackbohrung 51 des Oberstempels 4 hineinragt. Dies ist der Ausgangszustand zu Beginn des axialen Pressens gemäß dem zweiten Schritt S2, für das die Pressform 8, 9 anschließend aufgeheizt wird.

Der Unterstempel 5 presst nun den Pulverpressling 1 axial gegen den Oberstempel 4 und bewegt sich dabei aufgrund der resultierenden Volumenverringerung des Pulverpresslings 1 auf den Oberstempel 4 zu. Der Mittelstift 7 macht diese Bewegung mit, sodass er am Ende des Axialpressens tiefer in der Sackbohrung 51 einliegt. Den Endzustand des axialen Pressens zeigt Bild C von Figur 6. Aus dem Pulverpressling 1 ist nun der Rohling 2 geworden, in dem das Magnetmaterial verdichtet ist und der sich in Form und Größe vom Pulverpressling 1 lediglich in seiner axialen Länge unterscheidet.

Der hergestellte Rohling 2 wird anschließend auf eine zweite axiale Höhe H₂ verfahren, auf der die Querpressachse 39 der Querstempel 6 liegt. Dieser Transport erfolgt durch den Mittelstift 7, auf dem der Rohling 2 aufgrund des Axialpressens kraftschlüssig haftet. Wie Bild D von Figur 5 zeigt, wird der Rohling 2 hierfür bezogen auf die axiale Höhe der Querstempel 6 mittig vor diesen bzw. zwischen diesen positioniert. Die Höhe der Querstempel 6 ist so bemessen, dass sie größer ist als die axiale Länge des Rohlings 2 in seiner Ausgangsform 2a, um zu ermöglichen, dass der Rohling 2 beim Umformen kontrolliert in axialer Richtung fließt. Aufgrund des Drucks und des Fließens richten sich die die magnetischen Dipole erzeugenden Kristallachsen im Magnetmaterial radial aus.

Um die Querstempel 6 in ihrer Bewegung nicht zu behindern, sind der Ober- und Unterstempel 4, 5 aus der Flucht der Querstempel 6 zurückgefahren. Sie sind jedoch so positioniert, dass sie axiale Endanschläge für den axial fließenden Rohling 2 bilden. Wie Bild D in Figur 5 zeigt, fluchtet der Oberstempel 4 mit der oberen Führung der Querstempel 6 bzw. der Querausnehmungen in der Pressform 8, 9, und der Unterstempel 4 fluchtet mit der unteren Führung der Querstempel 6 bzw. der Querausnehmungen in der Pressform 8, 9. Da die Erstreckung der Querstempel 6 entlang der Längspressachse 10 größer ist, als die axiale Länge des Rohlings 2, ergibt sich durch die Positionierung von Ober- und Unterstempel 4, 5 eine Beabstandung zum Rohling 2 derart, dass zwischen dem Oberstempel 4 und dem Rohling 2 ein oberer hohler Ringraum 58, und zwischen dem Rohling 2 und dem Unterstempel 5 ein unterer hohler Ringraum 59 gebildet ist. Die Ringräume 58, 59 bilden für das umzuformende Material des Rohlings 2 leere Ausweichvolumina. Die axialen Stirnseiten von Ober- und Unterstempel 4, 5 bilden ferner die axialen Endanschläge für den umgeformten Rohling 2, da sie die Ringräume 58, 59 begrenzen.

Bild D von Figur 5 zeigt den Ausgangszustand des erfindungsgemäßen Fließpressens gemäß Schritt S3 quer zur Längspressachse 10 beziehungsweise quer zur Rohlingachse 17. Die Querstempel 6 werden nun unter Aufwendung einer Presskraft F, die durch die dicken Pfeile in Bild D dargestellt ist, quer zur bzw. radial auf die Rohlingachse 17 zu bewegt (Schließbewegung) und der Rohling 2 dadurch gepresst. Da der Rohling bereits aufgrund des axialen Pressens eine maximale Dichte hat, werden durch das radiale Pressen Volumenelemente des Rohlings 2 verschoben. Dies erfolgt in axialer Richtung, da der Rohling 2 nur in die Ringräume 58, 59 hinein ausweichen kann. Somit fließt der Rohling 2 in axialer Richtung, sodass die Länge des Rohlings 2 zunimmt, vergleiche die Einzeldarstellungen in Figur 5 oben von Zeitpunkt A zu Zeitpunkt B.

Dieses radiale Fließpressen wird erfindungsgemäß mehrfach wiederholt ausgeführt. Die Querstempel 6 werden daher wieder radial von der Rohlingachse 17 zurückgefahren (Öffnungsbewegung) und der Rohling 2 dadurch freigegeben. Die Hublänge der Querstempel 6 ist beim ersten Fließpressen derart kurz, dass der Rohling 2 nicht die Endanschläge erreicht, d.h. nicht den Ober- und Unterstempel 4, 5 erreicht. Dies ist erst nach mehreren Malen des Fließpressens der Fall.

Nach dem ersten radialen Fließpressen (Schritt S33 in Figur 2) erfolgt eine Drehung 25 des Rohlings 2 um seine Achse 17 (Schritt 36 in Figur 2), die identisch zur Längspressachse 10 ist. Die Drehung 25 erfolgt um 25° bis 45° beispielsweise um den Drehwinkel 20 gemäß Figur 5, d.h. um 30°. Die Drehung des Rohlings 2 wird durch eine Drehung des Mittelstifts 7 bewirkt. Um den Mittelstift 7 aufnehmen zu können, ist der Unterstempel 5 hohl. Er weist einen über die gesamte axiale Länge erstreckenden Hohlraum mit einem kreiszylindrischen Durchmesser auf, so dass der Mittelstift 7 relativ zum Unterstempel 5 gedreht werden kann. Allerding kann auch ein Formschluss zwischen dem Mittelstift 7 und dem Unterstempel 5 bestehen und der Unterstempel 5 gedreht werden, um den Rohling 2 zu drehen.

Nach der Drehung erfolgt eine weitere Schließbewegung der Querstempel 6 und der Rohling 2 wird erneut gepresst. Die Hublänge der Querstempel 6 ist nun größer, als beim vorherigen Fließpressen, jedoch noch nicht maximal. Erneut werden Volumenelemente des Rohlings 2 verschoben, und er fließt ein Bisschen weiter in axialer Richtung. Anschließend erfolgt erneut eine Öffnungsbewegung der Querstempel 6, gefolgt von einem weiteren Drehen 25 des Rohlings 2 durch den Mittelstift 7 und einer weiteren Schließbewegung der Querstempel 6. Dies wird n = 6-bis 24-mal wiederholt. Der Rohling 2 ist nach erfolgtem n-maligem Fließpressen schließlich gegen den Oberstempel 4 und den Unterstempel 5 geflossen und somit fertig gepresst. Die so hergestellte Endform 2b wird anschließend aus der Pressvorrichtung 50 heraustransportiert.

Bild E von Figur 5 zeigt die Ausstoßposition der Endform 2b, die den umgeformten Rohling 2 bildet. Zum Ausstoßen wird der Oberstempel 4 zunächst aus der Pressform herausbeweg und beabstandet zur Abdeckplatte 91 positioniert. Der Unterstempel 5 fährt ebenfalls leicht aus der Abdeckplatte 91 hervor. Der Mittelstift 7 fährt innerhalb des Unterstempels 5 zurück und aus dem gepressten Rohling 2 heraus. Die Endform 2b kann anschließend aus der Pressvorrichtung 50 entnommen werden.

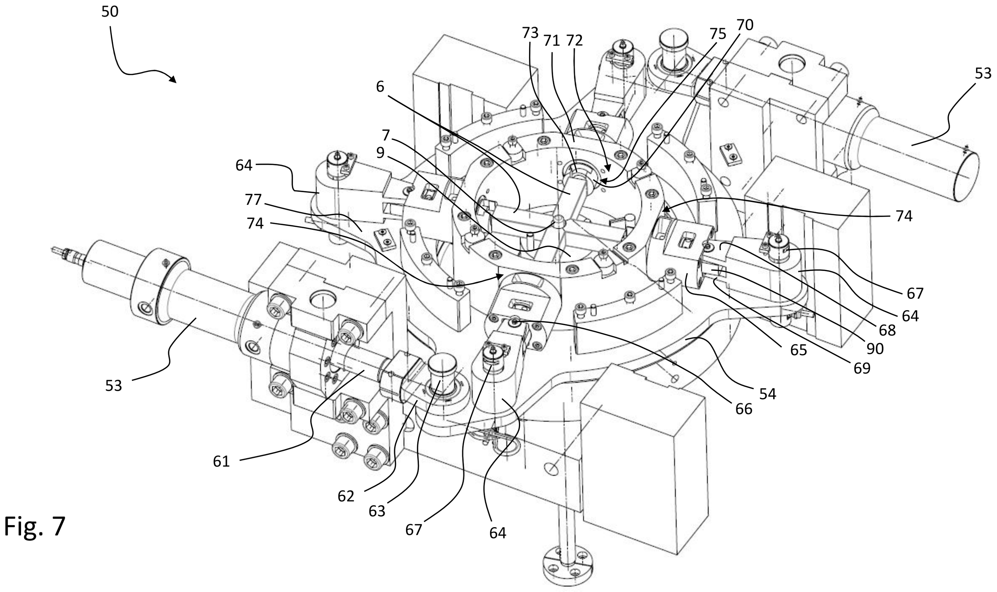

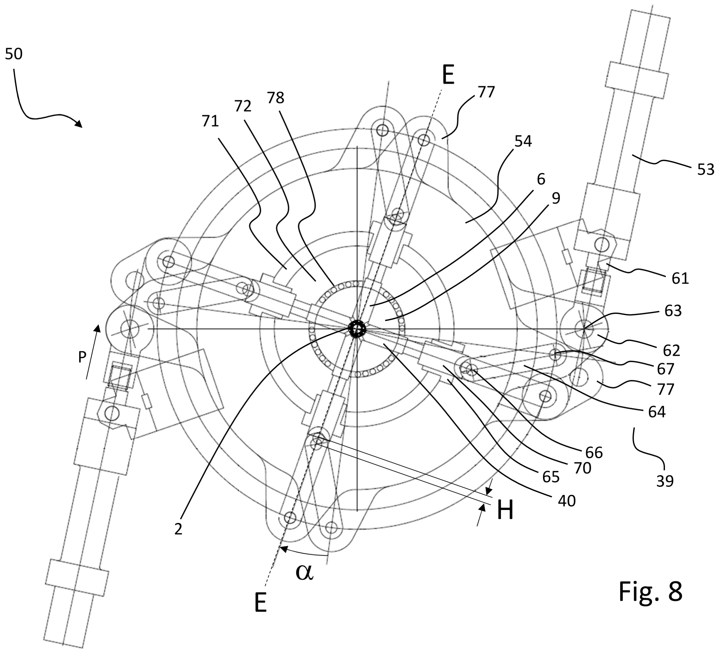

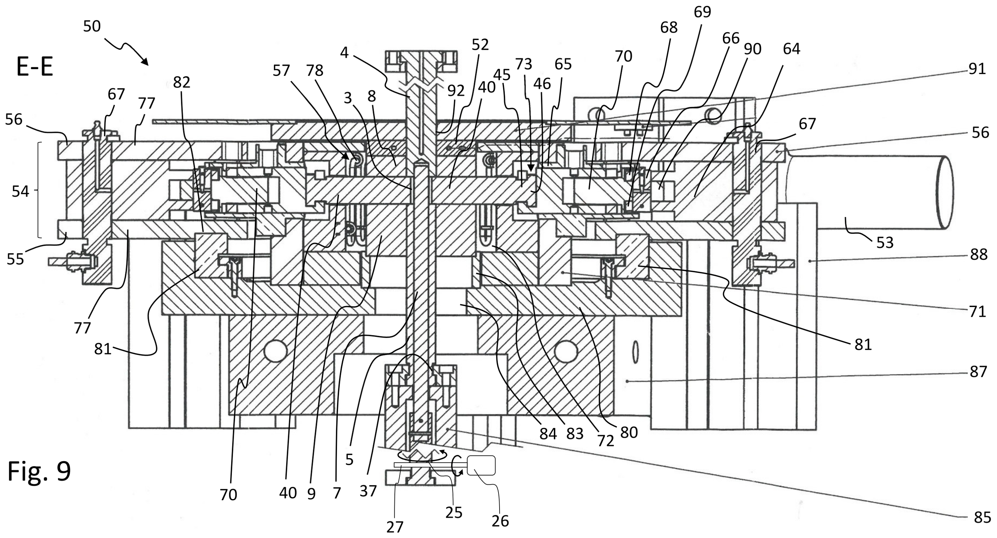

Figuren 7, 8 und 9 zeigen eine Pressvorrichtung 50 in perspektivischer Darstellung (Figur 7), im radialen Querschnitt (Figur 8) und im axialen Querschnitt (Figur 9).

Die Pressvorrichtung 50 weist ein Drehgestell 54 umfassend eine Unterplatte 55 und eine Oberplatte 56 auf, wobei in Figur 7 die Oberplatte 56 entfernt ist, um den Blick auf die Querstempel 6 und den Pressraum freizugeben. An gegenüberliegenden Seiten ist jeweils ein Hubkolben 61 eines Hydraulikzylinders 53 mit dem Drehgestell 54 verbunden. Hierzu umgreift eine am Ende des Hubkolbens 61 befestigte Gelenköse 62 einen Bolzen 63, der sich zwischen den beiden Platten 55, 56 des Drehgestells 54 erstreckt und mit diesen Platten 55, 56 fest verbunden ist. Der Hubkolben 61 ist linear beweglich, wobei seine Bewegung tangential zum Drehgestell 54 gerichtet ist, so dass sich das Drehgestell 54 durch eine Bewegung des Hubkolbens 61 um einen Winkel α verschwenken lässt, siehe Figur 8.

Jeder der Querstempel 6 ist an seinem radial äußeren Ende über ein Kniegelenk 66 mit einem Kniehebel 64 verbunden. Der Kniehebel 64 umgreift einen Gelenkbolzen 67, um dessen Achse der Kniehebel 64 verschwenkbar ist. Der Gelenkbolzen 67 ist an seinen beiden Enden fest mit den beiden Platten 55, 56 des Drehgestells 54 verbunden. Um Material einzusparen, besitzen die Platten 55, 56 des Drehgestells 54 Erweiterungen 77, in deren Bereich jeweils einer der Gelenkbolzen 67 eines Kniehebels 64 angeordnet ist. Zwischen zwei in Umfangsrichtung benachbarten Erweiterungen 77 ist der Außendurchmesser der Ober- und Unterplatte 55, 56 somit verringert. Zwei der beiden Erweiterungen 77 dienen gleichzeitig als Angriffspunkt für jeweils einen der beiden Hubkolben 61, wobei diese beiden Erweiterungen 77 in Umfangsrichtung breiter ausgebildet sind, als die anderen beiden Erweiterungen 77, um für den Angriffspunkt ausreichen Platz zu bieten.

Jeder Kniehebel 64 weist eine zum entsprechenden Querstempel 6 gerichtete, gabelförmige Aufnahme auf, umfassend einen oberen Vorsprung 68 und einen diesem beabstandet gegenüberliegenden unteren Vorsprung 69. Das Kniegelenk 66 ist durch einen Gelenkstift gebildet, der sich durch die beiden Vorsprünge 68, 69 hindurcherstreckt und jenseits der Vorsprünge 68, 69 jeweils fixiert ist. Zwischen den Vorsprüngen 68, 69 der gabelartigen Aufnahme ist ein Zapfen 90 angeordnet, der das äußere radiale Ende eines Querstempels 6 bildet. Der Zapfen 90 besitzt eine Bohrung, durch die sich der Gelenkstift ebenfalls hindurch erstreckt.

Die Querstempel 6 sind jeweils in einem Führungselement 65 geführt, welches an einer Abflachung 74 der Außenwand eines Heizkastens 71 befestigt ist. Der Heizkasten 71 umschließt eine Heizkammer 72, innerhalb welcher eine aus Heizdrähten 78 bestehende Heizung 57 die Pressform umgebend angeordnet ist, vgl. Figuren 8 und 9. Die Querstempel 6 erstrecken sich durch Öffnungen 75 des Heizkastens 71 in das Innere der Heizkammer 72 hinein, siehe insbesondere Figur 7. In Figur 7 ist das Oberteil 8 der Pressform entfernt, sodass der Blick auf das Unterteil 9 der Pressform frei ist, auf welchem die Querstempel 6 lagern.

Wie die Figuren 8 und 9 zeigen, sind die Querstempel 6 jeweils aus einem Stempelträger 70 und einem länglichen Stempelkörper 40, 41, 42 gebildet. Figuren 10 bis 12 zeigen verschiedene Ausführungsvarianten des Stempelkörpers 40, 41, 42.

Der Stempelkörper 40, 41, 42 ist lösbar an dem Stempelträger 70 befestigt. Diese Befestigung erfolgt an einem radial innerem Ende des Stempelträgers 70, wohingegen das andere, radial äußere Ende den Zapfen 90 aufweist, mit dem der Stempelträger 70 über das Kniegelenk 66 mit dem Kniehebel 64 verbunden ist. In dem Führungselement 65 ist lediglich der Stempelträger 70 geführt, wobei das radial innere Ende innerhalb der Heizkammer 72 liegt, um ein einfaches Entfernen des Stempelkörpers 40, 41, 42 zu ermöglichen.

Figur 7 zeigt die Pressvorrichtung 50 mit eingefahrenen Querstempeln 6, wobei der Mittelstift 7 über den Querstempeln 6 axial vorsteht, wie dies in Bild D von Figur 6 ebenfalls zu sehen ist.

Figur 8 veranschaulicht die Anfangs- und Endposition der Schwenkbewegung der Pressvorrichtung 50 in einer überlagerten Darstellung. In der Mitte der Vorrichtung 50 ist der ringförmige Rohling 2 erkennbar ist. Die Querstempel 6 sind hier geöffnet. Ein Verschwenken des Drehgestells 54 bewirkt, dass sich die Achse des Gelenkbolzens 67 entlang einer Kreisbahn bewegt. Dies führt dazu, dass der Kniehebel 64 um den Gelenkbolzen 67 schwenkt und dabei -je nach Bewegungsrichtung- den Querstempel 6 aus der Führung 65 herauszieht oder in diese hineinschiebt. Für das radiale Fließpressen bewegen sich die Hubkolben 61 aus den Hubzylindern 53 heraus (Pfeil P) und verschwenken das Drehgestell 54 im Uhrzeigersinn von einer Anfangsposition um den Winkel α in eine Endposition. Der Schwenkwinkel α wird dadurch in einen linearen Hub der Länge H umgewandelt. Während der Schwenkbewegung bewegen sich die Querstempel 6 entlang der Querpressachse 39 zunehmend auf die Rohlingachse 17 zu und verformen dabei den Rohlings 2 derart, dass er in axialer Richtung fließt. In der Endposition sind die Querstempel 6 vollständig eingefahren und liegen derart benachbart zueinander und aneinander an, dass ihre Pressflächen 43 vollständig die Außenkontur der Endform 2b bilden, siehe Fig. 7.

Allerding erfolgt das Verschwenken des Drehgestells 54 von der Anfangsposition in eine Endposition erfindungsgemäß nicht sofort, sondern inkrementell, indem der Drehteller 53 zunächst nur um einen anteiligen Schwenkwinkel α /n verschwenkt, anschließend wieder in die Ausgangsposition zurückgeschwenkt und dann erneut wieder in Richtung der Endposition geschwenkt wird, wobei das erneute Schwenken um den doppelten anteiligen Schwenkwinkel 2α /n erfolgt. Dieses Vor- und Zurückschwenken erfolgt n-Mal, wobei der Schwenkwinkel bei jedem erneuten Schwenken um einen anteiligen Schwenkwinkel α /n vergrößert wird, bis beim n-ten Schwenken der volle Schwenkwinkel n·α /n = α vorliegt. Somit wird bei jedem Verschwenken des Drehgestells 54 die Hublänge der Querstempel 6 größer und der Rohling 2 mehr gepresst. In der jeweils wieder erreichten Ausgangsposition des Drehtellers 53 wird der Rohling 2 zusätzlich um den Winkel 20 (Figur 5) gedreht und erst danach wird die Schwenkbewegung des Drehtellers mit inkrementiertem Schwenkwinkel wiederholt.

Figur 9 zeigt einen axialen Querschnitt durch eine Pressvorrichtung 50. In dieser Darstellung umfasst das Drehgestell 54 auch die Oberplatte 56, das Oberteil 8 der Pressform 8, 9 sowie die Abstandsplatte 52 und die Deckplatte 91, wie sie in Figur 6 dargestellt sind. Der Oberstempel 4 erstreckt sich durch eine Bohrung 92 in der Abdeckplatte 91 in die Pressform 8, 9 hinein. Ferner ist in Figur 9 erkennbar, dass das Drehgestell 54 auf der Unterseite seiner Unterplatte 55 Führungsnuten 82 aufweist, in denen Gleitschuhe 81 einliegen. Die Gleitschuhe 81 bilden eine Auflage für das Drehgestell 54 und sind aus Bronze hergestellt. Die Führungsnuten 82 sind Abschnitte einer Kreisbahn oder bilden eine einzige kreisförmige Führungsnut. Die Pressform 8, 9 ruht auf einem Aufstandsring 83, der sich auf einer Tragplatte 80 abstützt. Auf dieser Tragplatte 80 stützen sich auch die Gleitschuhe 81 sowie der Heizkasten 71 ab. Die Tragplatte 80 weist eine zentrale Bohrung 84 auf, durch die sich der Unterstempel 5 hindurch erstreckt. Das dem Oberstempel 4 gegenüberliegende Axialende des Unterstempels 5 ist in einer Unterstempelhalterung 85 aufgenommen, wobei Vorsprünge dieser Halterung 85 in eine Ausnehmungen 37 (Ringnut) des Unterstempels 5 formschlüssig eingreifen. Ein in Figur 9 nicht näher dargestellter Schwenkantrieb 26 steht mit dem Mittelstift 7 in Wirkverbindung, um diesen zu drehen (Pfeil 25) und damit die Drehung des Rohlings 2 zu bewirken. Der Schwenkantrieb 26 kann beispielsweise einen Servomotor und eine von diesem angetriebene Welle 27 umfassen, auf der ein Schneckengetriebe fixiert ist, das in ein Zahnrad in Form eines Schneckenrades eingreift, welches drehfest auf dem Mittelstift 7 montiert ist. Unterhalb der Tragplatte 80 befindet sich eine Kühlplatte 87 mit Kühlkanälen, um die Vorrichtung 50 nach einem Pressvorgang abzukühlen, siehe Schritt S4 in Figur 1. Figur 9 lässt ferner erkennen, dass die Pressvorrichtung 50 in einem Pressgestell 88 montiert ist.

Drei unterschiedliche Ausführungen von Stempelkörpern 40, 41, 42 sind in den Figuren 10 bis 12 dargestellt. Sie unterscheiden sich lediglich in der Ausgestaltung der Pressfläche 43, die zum Pressen der Flächen 15 der Mantelfläche des Rohlings 2 dienen. Die Stempelkörper 40, 41, 42 besitzen beispielhaft einen rechteckigen, insbesondere quadratischen Querschnitt und eine insgesamt längliche Grundform, wobei die Pressfläche 43 an einem axialen Ende des Stempelkörpers 40, 41, 42 ausgebildet ist. Am anderen Axialende besitzen die Stempelkörper 40, 41, 42 eine Pilzform. Diese ist gebildet durch einen Fortsatz 45 runden Querschnitts, der von der Außenkontur des Stempelkörpers 40, 41, 42 zurückspringt, d.h. eine geringere Abmessung aufweist. Der Fortsatz 45 erweitert sich in einem Abstand zum Stempelkörper 40, 41, 42 stufenartig derart, dass der Fortsatz 45 eine pilzkopfartige Erweiterung 46 aufweist. Auch diese Erweiterung 46 ist im Querschnitt rund, und steht nicht radial über die Außenflächen des Stempelkörpers 40, 41, 42 hervor. Der Stempelkörper 40, 41, 42 ist einstückig mit dem Fortsatz 45 und der pilzkopfartigen Erweiterung 46, allerdings kann der Fortsatz 45 auch in den Stempelkörper 40, 41, 42 eingeschraubt sein. Diese Ausgestaltung des der Pressform abgewandten Endes des Stempelkörpers 40, 41, 42 dient der schnellen und einfachen Auswechselbarkeit der Querstempel 6, indem der Fortsatz 45 und die Erweiterung 46 vorgesehen ist, in einer Tasche 73 des Stempelträgers 70 formschlüssig eingesetzt zu werden, vergleiche Figur 9. Eine solche Tasche 73 ist an dem zur Pressform gerichteten Ende des Stempelträgers 70 ausgebildet. Dabei ist die Tasche 73 zur Pressform hin geöffnet, damit sich der Fortsatz 45 aus der Tasche 73 radial heraus erstrecken kann. Ferner ist die Tasche 73 in axialer Richtung zur Abdeckplatte 91 hin geöffnet, um den Stempelkörper 40, 41, 42 durch axiales Fügen parallel zur Längspressachse 10 in die Tasche 73 einsetzen zu können.

Die Pressfläche 43 entspricht in der Ausführungsvariante gemäß Figur 10 in ihrer gesamten axialen Höhe dem Abschnitt eines Kreiszylindermantels. In jede Umfangsrichtung ist die Pressfläche 43 durch jeweils eine ebene Seitenflanke 44 begrenzt, welche in einem Winkel von 45° zur Längsachse des Stempelkörpers 40 liegt. Die im montierten Zustand der Querstempel 6 zueinander gerichteten Seitenflanken 44 benachbarter Querstempel 6 liegen im eingefahrenen Zustand der Querstempel 6 aneinander an und bilden somit einen geschlossenen Ring, wie dies in Figur 5 ganz rechts in der Mitte zu sehen ist.

Bei der Verformung des Rohlings 2 kann es vorkommen, dass Magnetmaterial zwischen gegenüberliegende Seitenflanken 44 benachbarter Querstempel 6 gelangt, wodurch einerseits ein Grad entsteht, andererseits die Querstempel 6 nicht vollständig einfahren können. Um einen solchen Grad zu vermeiden, zeigt die Ausführungsvariante des Stempelkörpers 41 gemäß Figur 11 eine Verlängerung der Seitenflanken 44 derart, dass sich entlang der Kanten, die die Pressfläche 43 in Umfangsrichtung begrenzen, jeweils ein Kantenvorsprung 47 erstreckt. Wie die Vergrößerung des Axialendes des Stempelkörpers 41 in Figur 11a zeigt, sind die beiden Kantenvorsprünge 47 nasenförmig, mit anderen Worten im Querschnitt etwa dreieckig. Sie bewirken, dass am Ende des Querfließpressens eine Umlenkung der außenliegenden Volumenanteile radial nach innen erfolgt, so dass das Magnetmaterial des Rohlings 2 von den Seitenflanken 44 abgehalten wird. In der Endform 2b bildet sich dann infolge der Kantenvorsprünge 47 eine Längsrille.

Eine dritte Ausführungsvariante eines Stempelkörpers 42 ist in Figur 12 gezeigt. Bei dieser Ausführungsvariante weist die Pressfläche 43 an ihrem oberen und unteren Axialende jeweils einen stufenförmigen, radialen Vorsprung 48 auf, der eine axiale Flussbegrenzung 49 für den umzuformenden Rohling 2 bildet. Dies verhindert, dass Material des Rohlings 2 zwischen den Oberstempel 4 und das Oberteil 8 der Pressform sowie zwischen den Unterstempel 5 und das Unterteil 9 der Pressform gelangt, was dort ebenfalls einerseits zu Graten, andererseits infolge der Stempelbewegungen zum Verschleiß der Stempel 4, 5 und der Pressform führen kann.

Im Einzelnen werden durch die vorliegende Erfindung die folgenden Vorteile erreicht:
1. Verbessertes Fließpressverfahren: Die Erfindung stellt ein verbessertes Fließpressverfahren bereit, indem der Rohling während der Verarbeitung zusätzlich um seine Achse gedreht wird. Das vorgeschlagene Verfahren beinhaltet also eine zusätzliche Rotation des Rohlings um seine Achse während der Bearbeitung. Diese Drehung trägt dazu bei, einen kreisrunden, mechanisch stabileren Permanentmagneten bzw. Magnetring zu erzeugen. Der Pressvorgang wird mehrmals hintereinander ausgeführt, wobei vorzugsweise 6- bis 24-mal eine Drehung erfolgt. Dies führt zu einem besseren und leichter wiederverwendbaren Magneten, der beim Magnetisieren keine besondere Ausrichtung erfordert. Vor jedem Pressvorgang wird der Magnet um 25-45° um die eigene Achse gedreht.
2. Erhöhte mechanische Stabilität: Ein kreisförmiger Querschnitt des kreisförmig hohlen Rohlings erhöht seine strukturelle Integrität und macht ihn weniger bruchanfällig gegenüber einer Querschnittsform mit abschnittsweise dünnen Wandabschnitten von beispielsweise 1mm, die bei der Rohlingform gemäß EP 3822991 B1 vorliegen. Diese Verbesserung reduziert nicht nur den Abfall und die Herstellungskosten, sondern erleichtert auch die Handhabung und Weiterverarbeitung der Magnete.
3. Optimierte Magnetausrichtung: Die Erfindung behebt das Problem einer suboptimalen magnetischen Ausrichtung insbesondere an den dünnwandigen Stellen von gemäß EP 3822991 B1 fließgepressten Rohlingen. Der wiederholt durchgeführte Pressvorgang und die zusätzliche Drehung zwischen zwei Pressvorgängen sorgt für eine bessere, da gleichmäßigere radiale Vorzugsausrichtung der Magnete, wodurch die Notwendigkeit einer präzisen Ausrichtung beim Magnetisieren entfällt. Die verbesserte magnetische Ausrichtung erhöht die Leistung der Magnete und des gesamten elektromechanischen Geräts.
4. Verbesserte Verfahrenssicherheit und Effizienz: Die erhöhte Stabilität des Rohlings macht den gesamten Herstellungsprozess einschließlich axialem Pressen und der Rohlinghandhabung zuverlässiger. Darüber hinaus spart der Wegfall der Notwendigkeit einer genauen Ausrichtung der Montage für die Magnetisierung Zeit und senkt die Herstellungskosten, wodurch die Gesamteffizienz des Herstellungsprozesses verbessert wird.
5. Vielseitige Anwendung: Mit dem neuen erfindungsgemäßen Verfahren können aus einem Rohling aus magnetischem Material Ringmagnete mit radial bevorzugter Magnetisierung hergestellt werden. Allerdings kann das Verfahren auch zur Herstellung anderer rotationssymmetrischer Permanentmagnete angepasst werden. Diese Vielseitigkeit erweitert die Anwendbarkeit des Verfahrens und macht es zu einer wertvollen Ergänzung des bestehenden Repertoires an Fertigungstechniken für Dauermagnete. Das Verfahren ist für eine breite Palette von magnetischen Werkstoffen und Produkten anwendbar.

Zusammenfassend stellt das vorgeschlagene Verfahren eine wesentliche Verbesserung gegenüber dem derzeitigen Stand der Technik bei der Herstellung von rotationssymmetrischen, ringförmigen Dauermagneten mit radialer Vorzugsmagnetisierung dar. Es adressiert die Einschränkungen der bestehenden Technologie gemäß EP 3822991 B1 und führt im Vergleich zu EP 3822991 B1 zu Magneten mit verbesserter struktureller Integrität, weil der o.g. Zwischenbereich, in dem das Magnetmaterial weniger geflossen ist, nicht vorhanden ist. Es wird eine optimierte magnetische Ausrichtung der Magnete und eine verbesserte Sicherheit und Effizienz des Verfahrens erreicht. Ferner ist das Verfahren vielseitig einsetzbar.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

1 Pulverpressling
2 Rohling
2a Rohling Ausgangsform
2b Rohling Endform
4 Oberstempel
5 Unterstempel
6 Querstempel
7 Mittelstift
8 Oberteil
9 Unterteil
10 Längspressachse
11 Außendurchmesser der Ausgangsform
12 Innendurchmesser der Ausgangsform
13 Außenkontur
14 Hohlraum
15 gepresste Flächen
16 Innenkontur
17 Rohlingachse
18 Zwischenbereich zwischen gepressten Flächen
19 Neue Innenkontur
20 Drehwinkel
21 Vorsprung
22 Neuer Vorsprung
23 Unebenheit
24 Außenkontur der Endform
25 Drehung
26 Schwenkantrieb
27 Antriebswelle
30 Permanentmagnet
37 Ausnehmung
38 Magnetisierung
39 Querpressachse
40 - 42 Stempelkörper
43 Pressfläche
44 Seitenflanken
45 Fortsatz
46 Erweiterung, radial pilzkopfartig
47 Kantenvorsprung
48 Radialer Stufenvorsprung
49 axiale Flussbegrenzungen
50 Pressvorrichtung
51 Sackbohrung
52 Abstandsplatte
53 Hydraulikzylinder, Hubzylinder
54 Drehgestell
55 Unterplatte von Drehgestell
56 Oberplatte von Drehgestell
57 Heizung
58 oberer hohler Ringraum (Leeres Ausweichvolumen)
59 unterer hohler Ringraum (Leeres Ausweichvolumen)
61 Hubkolben
62 Gelenköse
63 Bolzen
64 Kniehebel
65 Führungselement
66 Kniegelenk
67 Gelenkbolzen
68 Oberer Vorsprung (der gabelartigen Aufnahme)
69 Unterer Vorsprung (der gabelartigen Aufnahme)
70 Stempelträger
71 Heizkasten
72 Heizkammer
73 Tasche
74 Abflachung
75 Öffnung
77 Erweiterung
78 Heizdraht
80 Tragplatte
81 Gleitschuh, Bronze, bildet Auflage für Drehgestell
82 Führungsnut
83 Aufstandsring
84 Bohrung
85 Unterstempelhalterung
87 Kühlplatte
88 Gestell
90 Zapfen
91 Abdeckplatte
92 Bohrung

## Patentansprüche

1. Verfahren zur Herstellung eines rotationssymmetrischen, insbesondere ringförmigen Permanentmagneten (30) mit radial vorzugsgerichteter Magnetisierung (38) durch Fließpressen eines rotationssymmetrischen Rohlings (2) aus Magnetmaterial mittels Querstempeln (6) quer zur Rohlingachse (27) unter Reduzierung seines Querschnitts und Verlängerung seiner axialen Länge während der Rohling (2) gegen axiale Endanschläge (4, 5) fließt, **dadurch gekennzeichnet, dass** das Fließpressen zyklisch wiederholt wird, indem die Querstempel (6) wiederholt schließen und öffnen, und der Rohling (2) zwischen zwei aufeinander folgenden Fließpressungen um seine Achse gedreht wird.

2. Verfahren nach Anspruch 1, **dadurch gekennzeichnet, dass** der Rohling (2) einen Hohlkörper bildet.

3. Verfahren zumindest nach Anspruch 2, **dadurch gekennzeichnet, dass** ein drehbarer Mittelstift (7) den Rohling (2) durchragt und gedreht wird, um den Rohling (2) zu drehen.

4. Verfahren nach Anspruch 1 oder 2, **dadurch gekennzeichnet, dass** der Rohling (2) insgesamt 6- bis 24-mal gedreht wird.

5. Verfahren nach einem der vorherigen Ansprüche, **dadurch gekennzeichnet, dass** die Drehung des Rohlings (2) im Falle einer Verwendung von vier, fünf, sechs oder acht Querstempeln, um einen Winkel zwischen 25° und 45°, vorzugsweise zwischen 30° und 35° erfolgt.

6. Verfahren nach einem der vorherigen Ansprüche, **dadurch gekennzeichnet, dass** der Drehwinkel bei einem wiederholten Drehen des Rohlings (2) gegenüber dem Drehwinkel eines vorherigen Drehens betragsmäßig verändert ist.

7. Verfahren nach einem der vorherigen Ansprüche, **dadurch gekennzeichnet, dass** der Rohling (2) vor und zurück gedreht wird.

8. Verfahren nach einem der vorherigen Ansprüche, **dadurch gekennzeichnet, dass** das Fließpressen 6- bis 12-mal pro Minute erfolgt.

9. Verfahren nach einem der vorherigen Ansprüche, **dadurch gekennzeichnet, dass** das Fließpressen ruckfrei mit einem kontinuierlichen, mehrere Sekunde anhaltendem Krafteintrag erfolgt.

10. Verfahren nach einem der vorherigen Ansprüche, **dadurch gekennzeichnet, dass** der Rohling (2) vor dem Fließpressen auf eine Verformungstemperatur erwärmt und in diesem erwärmten Zustand fließgepresst wird.

11. Verfahren nach einem der vorherigen Ansprüche, **dadurch gekennzeichnet, dass** der Rohling (2) ein Pulverpressling (1) ist, der durch axiales Pressen eines Pulvers des Magnetmaterials in einer Pressform (8, 9) einer Pressvorrichtung (50) mittels einem Oberstempel (4) und einem Unterstempel (5) hergestellt wird, die relativ zueinander axial bewegt werden, während der Pulverpressling (1) zwischen ihnen liegt, wobei die Pressform (8, 9) einen Innenraum aufweist, der die Außenkontur des Rohlings (2) definiert.

12. Verfahren nach einem der Ansprüche 11, **dadurch gekennzeichnet, dass** der Rohling (2) und der Ober- und/ oder Unterstempel (4, 5) vor dem Fließpressen relativ zueinander derart positioniert werden, dass der Ober- und/ oder der Unterstempel (4, 5) die axialen Endanschläge für das beim Fließpressen des Rohlings (2) fließende Magnetmaterial bildet/ bilden.

13. Pressvorrichtung (50) zur Herstellung eines rotationssymmetrischen, insbesondere ringförmigen Permanentmagneten (30) mit radial vorzugsgerichteter Magnetisierung (38) durch Fließpressen eines rotationssymmetrischen Rohlings (2) aus Magnetmaterial, umfassend quer zur Rohlingachse (27) bewegliche Querstempel (6) und axiale Endanschläge (4, 5), um den Rohling unter Reduzierung seines Querschnitts und Verlängerung seiner axialen Länge zu pressen während er gegen die axialen Endanschläge (4, 5) fließt, **gekennzeichnet durch** Mittel zur Drehung des Rohlings (2) zwischen zwei aufeinander folgenden Fließpressungen.

14. Pressvorrichtung (50) nach Anspruch 13, **dadurch gekennzeichnet, dass** die Anzahl der Querstempel (6) zwischen 4 und 8 beträgt.

15. Pressvorrichtung (50) nach Anspruch 13 oder 14, **gekennzeichnet durch** eine Pressform (8, 9) und einen darin geführten Ober- und Unterstempel (4, 5), die relativ zueinander axial beweglich sind, um den Rohling (2) durch axiales Pressen in der Pressform (8, 9) aus einem Pulverpressling herzustellen.

16. Pressvorrichtung (50) nach Anspruch 13, 14 oder 15, **dadurch gekennzeichnet, dass** Mittel zur Drehung des Rohlings (2) einen Drehteller, auf dem der Rohling (2) haltlos angeordnet ist, oder einen den Rohling (2) durchragenden Mittelstift (7) umfasst, auf dem der Rohling (2) drehfest angeordnet ist, wobei der Drehteller oder der Mittelstift (7) schwenk- oder drehbar antreibbar sind.
